# EUROPÄISCHE PATENTSCHRIFT

(11) **EP 2 129 931 B1**
(45) Veröffentlichungstag und Bekanntmachung des Hinweises auf die Patenterteilung: **24.04.2013**
(21) Anmeldenummer: 08717858.8
(22) Anmeldetag: 14.03.2008
(51) Int. Cl.: F16F 1/387, F16F 9/04, F16F 13/20

(54) **ELASTISCHE LAGERBUCHSE**
ELASTIC BEARING BUSH
COUSSINET ELASTIQUE

(30) Priorität: 29.03.2007 DE 102007015239
(43) Veröffentlichungstag der Anmeldung: 09.12.2009
(73) Patentinhaber: Trelleborg Automotive Germany GmbH, 64747 Breuberg (DE)
(72) Erfinder: GRAEVE, Arndt, 56072 Koblenz (DE)
(74) Vertreter: Preissner, Nicolaus
(86) Internationale Anmeldenummer: PCT/EP2008/053117
(87) Internationale Veröffentlichungsnummer: WO 2008/119652

(56) Entgegenhaltungen:
- EP-A- 0 300 090
- EP-B- 1 056 962
- WO-A-98/58834
- DE-A1- 10 200 764
- DE-A1- 19 807 340
- DE-A1-102005 028 563
- DE-B- 1 159 704
- GB-A- 945 860
- GB-A- 2 211 271
- JP-A- 60 184 740
- US-A- 3 467 421
- US-A- 4 728 086

## Beschreibung

Die vorliegende Erfindung betrifft eine elastische Lagerbuchse, insbesondere zur Verwendung in einem Fahrwerk eines Kraftfahrzeugs, mit einem Kern, der innerhalb eines Gehäuses angeordnet ist und über einen Elastomerkörper mit dem Gehäuse verbunden ist, wobei die Lagerbuchse in einer ersten Raumrichtung und einer zweiten Raumrichtung unterschiedliche Feder- und Dämpfungseigenschaften aufweist und wobei die Feder- und Dämpfungseigenschaften von wenigstens einem Luftfederelement und wenigstens einer Elastomerfeder bestimmt sind.

Derartige Lagerbuchsen werden häufig als Fahrwerksbuchsen verwendet. Oftmals sind für solche Lagerbuchsen unterschiedliche Feder- und Dämpfungseigenschaften in unterschiedlichen Raumrichtungen erforderlich. So ist beispielsweise bei Verwendung in einem Fahrwerk eine sehr hohe Steifigkeit in Fahrzeugquerrichtung erforderlich, während in Fahrzeuglängsrichtung eine deutlich geringere Steifigkeit ausreicht.

Um dies zu erreichen, wird in der EP 1 056 962 B1 ein im Wesentlichen zylinderförmiges Gummilager vorgeschlagen, bei dem der Elastomerkörper in Umfangsrichtung in seiner Dicke variiert, beziehungsweise Ausnehmungen aufweist. Ein Innenteil, von dem der Elastomerkörper abgestützt wird, hat im Bereich der Ausnehmungen jeweils seine größte radiale Ausdehnung. Weiter weist das Gummilager in seinem Randbereich Kanäle auf, die ein Ausweichen von Luft oder einem flüssigen Dämpfungsmittel von einer Ausnehmung zu der jeweils gegenüberliegenden Ausnehmung ermöglichen.

Die DE-B 1 159 704 offenbart eine elastische Buchse, bei der ein Kern über zwei aneinander anstoßende Elastomerkörper in einem Gehäuse gelagert ist. Die Elastomerkörper weisen Schlitze auf, die eine axiale Gleitbeweglichkeit ermöglichen sollen.

Die DE 102 00 764 A1 offenbart ein Luftfederlager, das ein Gehäuse mit quadratischer Grundform aufweist. Ein Kern wird über einen Elastomerkörper, der Stege aufweist, an dem Gehäuse gelagert. Der Elastomerkörper bildet vier sogenannte dynamische Kammern aus. Die Kammern sind beispielsweise mit Luft oder Stickstoff gefüllt. Über eine Drosselöffnung kann die Luft aus den Kammern ausströmen.

Der Erfindung liegt die Aufgabe zugrunde, eine Lagerbuchse der eingangs genannten Art zu schaffen, deren Dämpfungseigenschaften leicht anpassbar sind und die kostengünstig und einfach herstellbar ist.

Zu Lösung dieser Aufgabe wird eine Lagerbuchse der eingangs genannten Art vorgeschlagen, die eine im Wesentlichen rechteckige Grundfläche aufweist, wobei die Längsseiten des Gehäuses länger als die Stirnseiten des Gehäuses sind, wobei das Luftfederelement in dem Elastomerkörper entlang der Längsseiten des Gehäuses zwischen dem Kern und dem Gehäuse ausgebildet ist, und wobei die Elastomerfeder an den Stirnseiten des Gehäuses angeordnet ist.

Die erfindungsgemäße Lagerbuchse hat den Vorteil, dass die Feder- und Dämpfungseigenschaften in verschiedenen Raumrichtungen jeweils von einem einzeln einstellbaren Federelement bestimmt werden. Die einzelnen Federelemente wiederum sind einfach zu dimensionieren und herzustellen. Weiter kann aufgrund der rechteckigen Grundfläche der Lagerbuchse besonders einfach ein Luftfederelement in der Lagerbuchse angeordnet werden, das einen großen Pumpdurchmesser aufweist. Durch die Zuordnung zu einer Längsseite des Gehäuses verfügt das Luftfederelement über eine gro-βe Pumpfläche. In Verbindung mit einem geringen Volumen des Luftfederelements können so hervorragende Dämpfungseigenschaften erreicht werden.

Vorteilhafte Ausgestaltungen sind Gegenstand der Unteransprüche.

Das Luftfederelement kann in dem Elastomerkörper in der ersten Raumrichtung zwischen dem Kern und dem Gehäuse ausgebildet sein.

Das wenigstens eine Luftfederelement weist bevorzugt eine Drosselöffnung auf, die eine Hohlkammer des Luftelements mit der Umgebung verbindet.

Weiter kann die Elastomerfeder als Stollen ausgebildet sein, der zwischen dem Kern und dem Gehäuse angeordnet ist.

Ebenso kann vorteilhaft vorgesehen sein, dass die Lagerbuchse zwei Luftkammern aufweist, deren Hohlkammern über einen Kanal miteinander verbunden sind.

Vorteilhaft ist der Kanal in einer Kanalschale ausgebildet.

Weiter kann der Kanal vorteilhaft in den Kern integriert sein. Dadurch kann die Zahl der Einzelkomponenten verringert und die Montage der Lagerbuchse weiter vereinfacht werden.

In vorteilhafter Ausgestaltung ist die Lagerbuchse in Horizontalrichtung geteilt und weist zwei Halbbuchsen auf. Damit ist eine einfache Herstellbarkeit der Lagerbuchse gewährleistet.

Hierbei können die Halbbuchsen vorteilhaft einen identischen Aufbau aufweisen. So kann die Herstellung der Lagerbuchsen aus gleichen Bauteilen erfolgen.

Vorteilhaft können die Elastomerkörper der Halbbuchsen Lufttaschen aufweisen, die im zusammengesetzten Zustand der Halbbuchsen die Hohlkammern der Luftfederelemente bilden. Dadurch kann auf einen zusätzlichen Aufbau zum Abschließen der Hohlkammern verzichtet werden.

Die Elastomerkörper der Halbbuchsen schließen bevorzugt im zusammengefügten Zustand die Hohlkammern der Halbbuchsen luftdicht ab. Somit kann auf zusätzliche Abdichtungsvorrichtungen verzichtet werden, was die Produktion vereinfacht und kostengünstiger macht.

Die Lagerbuchse kann vorteilhafterweise wenigstens einen Befestigungsflansch aufweisen. Damit ist eine einfache Befestigungsmöglichkeit der Lagerbuchse in einem Kraftfahrzeug gegeben.

Bevorzugt kann vorgesehen sein, dass der Elastomerkörper an dem Befestigungsflansch einen Anschlag ausbildet. Dieser Anschlag vereinfacht die Befestigung der Lagerbuchse.

Der Kern kann vorteilhaft eine Befestigungsöffnung aufweisen.

Vorteilhaft ist vorgesehen, dass der Elastomerkörper zwischen Kern und Gehäuse einvulkanisiert ist. Dies gewährleistet einen sicheren Halt des Elastomerkörpers an Kern und Gehäuse.

Die Erfindung wird nachfolgend anhand von Ausführungsbeispielen näher erläutert, die in den Zeichnungen schematisch dargestellt sind. Es zeigen:
- Fig. 1: eine perspektivische Ansicht einer Lagerbuchse gemäß einer ersten Ausführungsform der vorliegenden Erfindung, wobei vom Mittelpunkt der Befestigungsöffnung ausgehend jeweils ein Vertikalschnitt in Längs- und in Querrichtung ausgeführt ist;
- Fig. 2: einen Horizontalschnitt durch die Lagerbuchse aus Fig. 1;
- Fig. 3: einen Schnitt durch die Lagerbuchse aus Fig. 2 entlang der Linie III - III;
- Fig. 4: einen Horizontalschnitt durch eine Kanalschale gemäß einer zweiten Ausführungsform der vorliegenden Erfindung und
- Fig. 5: einen Vertikalschnitt durch die Lagerbuchse gemäß der zweiten Ausführungsform und
- Fig. 6: einen Horizontalschnitt durch die Lagerbuchse gemäß einer dritten Ausführungsform der vorliegenden Erfindung.

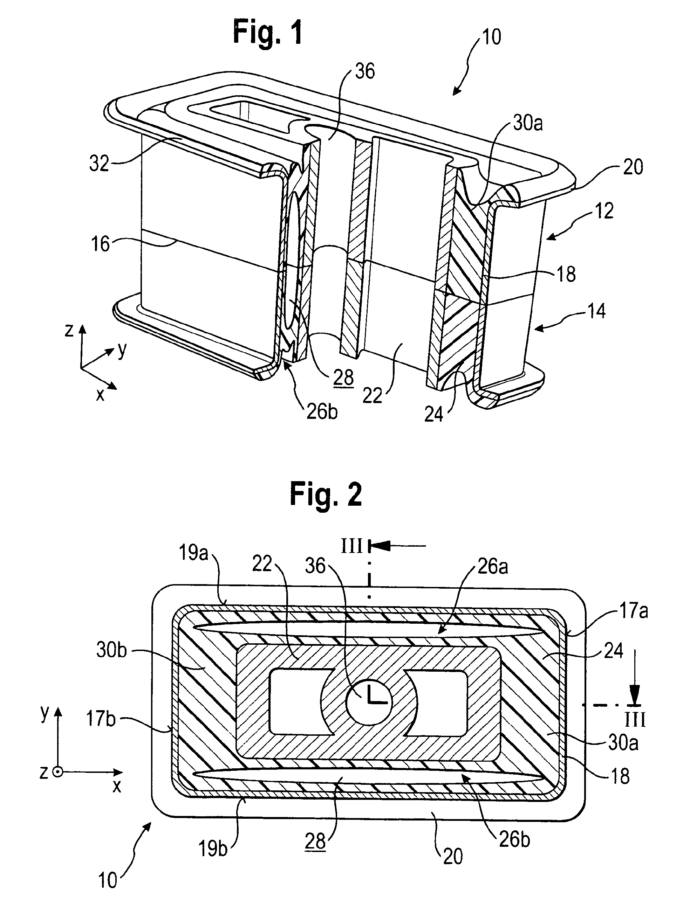

Die in Fig. 1 gezeigte Lagerbuchse 10 weist ein Gehäuse 18 mit einer im Wesentlichen rechteckigen Grundform auf, das mit einem Befestigungsflansch 20 ausgebildet ist. Das Gehäuse 18 ist aus Metallblech hergestellt. Im Inneren des Gehäuses ist ein Kern 22 aus Metall angeordnet. Zur Herstellung des Kerns 22 kann beispielsweise stranggepresstes Aluminium verwendet werden. Der Kern 22 ist mit dem Gehäuse 18 mittels eines Elastomerkörpers 24 verbunden.

Der Elastomerkörper 24 ist zwischen Kern 22 und Gehäuse 18 einvulkanisiert, so dass eine kraftschlüssige Verbindung zwischen Elastomerkörper 24 und Gehäuse 18 sowie Kern 22 besteht.

Die Lagerbuchse 10 besteht aus zwei Halbbuchsen 12, 14, die an einer Kontaktebene 16 aneinander stoßen und die einen identischen Aufbau aufweisen.

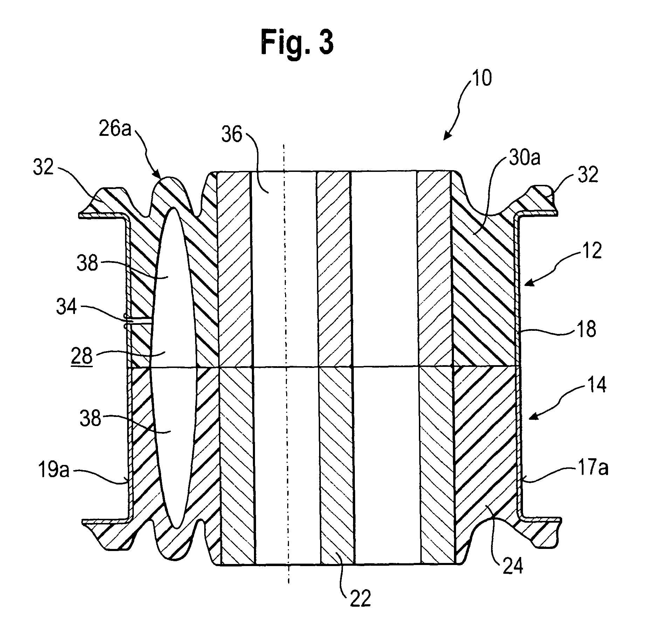

Wie besonders gut aus Fig. 2 ersichtlich ist, sind entlang der Längsseiten 19a, 19b des Gehäuses 18 Luftfederelemente 26a, 26b angeordnet. Die Luftfederelemente 26a, 26b weisen jeweils eine Hohlkammer 28 auf. Die Hohlkammer 28 ist in dieser Ausführungsform mit Luft gefüllt. Die Hohlkammer 28 der Luftfederelemente 26a, 26 b ist über einen Drosselkanal 34 mit der Umgebung verbunden, der aus Fig. 3 ersichtlich ist.

Zwischen den Stirnseiten 17a, 17b des Kerns 22 und des Gehäuses 18 weist der Elastomerkörper 24 eine Elastomerfeder 30 auf, die als Stollen ausgebildet ist. Weiter weist der Elastomerkörper 24 entlang der Befestigungsseiten der Befestigungsflansche 20 Anschläge 32 auf, die in Fig. 1 und Fig. 3 deutlich zu erkennen sind.

In dem Gehäuse 18 ist eine Drosselöffnung 34 eingebracht, die sich durch den Elastomerkörper 24 und das Gehäuse 18 bis zur Außenwand der Lagerbuchse 10 erstreckt.

Der Kern 22 weist weiter eine kreisförmige Befestigungsöffnung 36 auf.

Zum Aufbau einer Lagerbuchse 10 werden zwei identische Halbbuchsen 12, 14 mit ihren Kontaktebenen 16 aufeinander gesetzt und in einer Halterung so befestigt, dass die beiden Halbbuchsen 12, 14 fest zusammen gehalten werden. Durch die Kraft, die auf die Halbbuchsen 12, 14 aufeinander zu ausgeübt wird, schließen die Elastomerkörper 24 der Halbbuchsen 12, 14 luftdicht ab. Die Teile des Kerns 22 werden mit leichter Vorspannung montiert.
Wie in Fig. 3 zu sehen, weist jede der Halbbuchsen 12, 14 an ihren Längsseiten Lufttaschen 38 auf. Beim Zusammensetzen der Lagerbuchse 10 bildet sich durch das luftabschließende Zusammenfügen der Elastomerkörper 24 aus jeweils zwei Lufttaschen 38 eine Hohlkammer 28.

Zur Montage wird die Lagerbuchse 10 mit dem Gehäuse 18 beispielsweise in einen Hilfsrahmen gepresst. Ein Abschnitt des Fahrzeugrahmens wird dann durch die Befestigungsöffnung 36 des Kerns 22 geführt und mit dieser fest verbunden. Somit ist der Kern 22 fahrzeugseitig befestigt.

Die Lagerbuchse 10 wird so ausgerichtet, dass die Luftfederelemente 26a, 26b der Fahrzeuglängsrichtung y und die Elastomerfedern 30a, 30b der Fahrzeugquerrichtung x zugeordnet sind.

Die Lagerbuchse 10 weist in den Raumrichtungen x, y jeweils unterschiedliche Feder- und Dämpfungseigenschaften auf. In der ersten Raumrichtung y werden die Dämpfungseigenschaften von den Luftfederelementen 26a, 26b bestimmt, die eine mit der Schwingungsamplitude überproportional steifer werdende Dämpfungscharakteristik aufweisen. In der zweiten Raumrichtung x bewirken die Elastomerfedern 30a, 30b eine hohe Steifigkeit in Fahrzeugquerrichtung.

Die Anordnung des Luftfederelemente 26a, 26b entlang der Längsseiten 19a, 19b der Lagerbuchse 10 bewirkt einen großen Pumpquerschnitt der Hohlkammer 28 bei ansonsten geringem Hohlkammervolumen.

Um niederfrequenten Schwingungen sowie statischen Verschiebungen des Kerns 22 gegenüber dem Gehäuse 18 Rechnung zu tragen, sind die Drosselöffnungen 34 so ausgeführt, dass sie einen vergleichsweise langsamen Druckausgleich der Hohlkammer 28 mit der Umgebung ermöglichen.

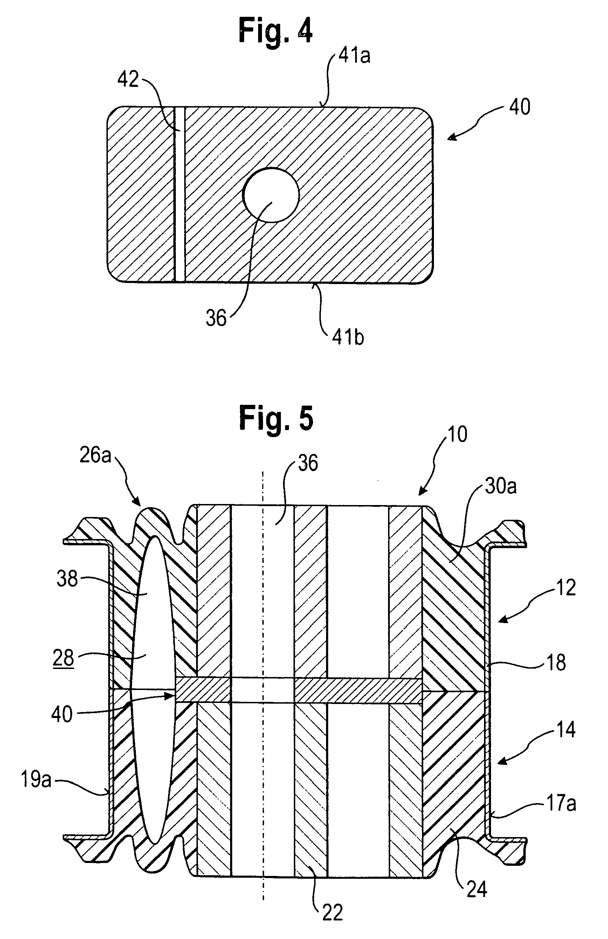

Fig. 5 zeigt ein weiteres Ausführungsbeispiel einer Lagerbuchse 10, zu deren Beschreibung die eingeführten Bezugszeichen für gleiche oder funktionsgleiche Teile verwendet werden.

Die Lagerbuchse 10 weist eine Kanalschale 40 auf, die in Fig. 4 gezeigt ist. Die Kanalschale 40 weist eine Befestigungsöffnung 36 auf, die mit den Befestigungsöffnungen 36 der Kerne 22 fluchtet. In der Kanalschale 40 ist ein Kanal 42 vorgesehen, der sich von einer Längsseite 41 a der Kanalschale 40 zu der gegenüberliegenden Längsseite 41 b erstreckt.

Die Kanalschale 40 ist so zwischen den Halbbuchsen 12, 14 angeordnet, dass sich durch den Kanal 42 eine kommunizierende Verbindung der Hohlkammern 28 der Luftfederelemente 26a, 26 b ergibt.

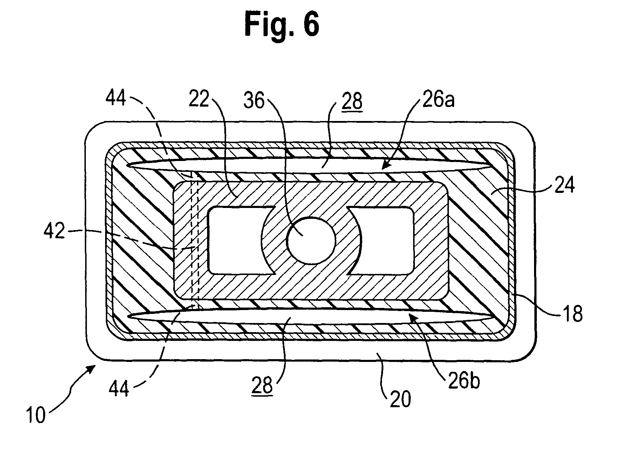

Bei der in Fig. 6 gezeigten dritten Ausführungsform ist der Kanal 42 durch den Kern 22 geführt. Dazu ist es ebenfalls nötig, in dem Elastomerkörper 24 Durchgangsöffnungen 44 vorzusehen, um die Hohlkammern 28 mittels des Kanals 42 miteinander zu verbinden.

Durch einfache Veränderungen der Geometrie des Elastomerkörpers 24 kann die Form der Hohlkammern 28 festgelegt werden. Damit lassen sich auf einfache und kostengünstige Weise die Dämpfungseigenschaften der Luftfederelemente 26a, 26b einstellen.

Darüber hinaus ist die Herstellung der Halbbuchsen 12, 14 mit Lufttaschen 38 einfacher als die Herstellung einer Elastomerfeder 24 mit darin enthaltener Hohlkammer 28.

Die erfindungsgemäße Lagerbuchse 10, die aus zwei Halbbuchsen 12, 14 zusammengesetzt ist und die aufgrund der Luftfederelemente 26a, 26b und der Elastomerstollen 30 in den Raumrichtungen x, y unterschiedliche Feder- und Dämpfungseigenschaften besitzt, weist einen einfachen Aufbau auf und ist somit kostengünstig herstellbar.

### Bezugszeichenliste

| | | | |
|---|---|---|---|
| 10 | Lagerbuchse | y | 1. Raumrichtung |
| 12 | Halbbuchse | x | 2. Raumrichtung |
| 14 | Halbbuchse | | |
| 16 | Kontaktebene | | |
| 17a | Stirnseite | | |
| 17b | Stirnseite | | |
| 18 | Gehäuse | | |
| 19a | Längsseite | | |
| 19b | Längsseite | | |
| 20 | Befestigungsflansch | | |
| 22 | Kern | | |
| 24 | Elastomerkörper | | |
| 26a | Luftfederelement | | |
| 26b | Luftfederelement | | |
| 28 | Hohlkammer | | |
| 30a | Elastomerfeder | | |
| 30b | Elastomerfeder | | |
| 32 | Anschlag | | |
| 34 | Drosselöffnung | | |
| 36 | Befestigungsöffnung | | |
| 38 | Lufttasche | | |
| 40 | Kanalschale | | |
| 41a | Längsseite | | |
| 41b | Längsseite | | |
| 42 | Kanal | | |

## Patentansprüche

1. Elastische Lagerbuchse (10), insbesondere zur Verwendung in einem Fahrwerk eines Kraftfahrzeugs, mit einem Kern (22), der innerhalb eines Gehäuses (18) angeordnet ist und über einen Elastomerkörper (24) mit dem Gehäuse (18) verbunden ist, wobei die Lagerbuchse (10) in einer ersten Raumrichtung (y) und einer zweiten Raumrichtung (x) unterschiedliche Feder- und Dämpfungseigenschaften aufweist, und wobei die Feder- und Dämpfungseigenschaften von wenigstens einem Luftfederelement (26a, 26b) und wenigstens einer Elastomerfeder (30a, 30b) bestimmt sind, **dadurch gekennzeichnet, dass** die Lagerbuchse (10) eine im Wesentlichen rechteckige Grundfläche aufweist, dass die Längsseiten (19a, 19b) des Gehäuses (18) länger als die Stirnseiten (17a, 17b) des Gehäuses (18) sind, dass das Luftfederelement (26a, 26b) in dem Elastomerkörper (24) entlang der Längsseiten (19a, 19b) des Gehäuses (18) zwischen dem Kern (22) und dem Gehäuse (18) ausgebildet ist, und dass die Elastomerfeder (30a, 30b) an den Stirnseiten (17a, 17b) des Gehäuses (18) angeordnet ist.

2. Lagerbuchse nach Anspruch 1, **dadurch gekennzeichnet, dass** das Luftfederelement (26a, 26b) in dem Elastomerkörper (24) in der ersten Raumrichtung (y) zwischen dem Kern (22) und dem Gehäuse (18) ausgebildet ist.

3. Lagerbuchse nach einem der voranstehenden Ansprüche, **dadurch gekennzeichnet, dass** das Luftfederelement (26a, 26b) eine Drosselöffnung (34) aufweist, die eine Hohlkammer (28) des Luftfederelements (26a, 26b) mit der Umgebung verbindet.

4. Lagerbuchse nach einem der voranstehenden Ansprüche, **dadurch gekennzeichnet, dass** die Elastomerfeder (30 a, 30 b) als Stollen ausgebildet ist, der zwischen dem Kern (22) und dem Gehäuse (18) angeordnet ist.

5. Lagerbuchse nach einem der voranstehenden Ansprüche, **dadurch gekennzeichnet, dass** zwei Luftfederelemente (26a, 26b) vorgesehen sind, deren Hohlkammern (28) über einen Kanal (42) verbunden sind.

6. Lagerbuchse nach Anspruch 5, **dadurch gekennzeichnet, dass** der Kanal (42) durch eine Kanalschale (40) gebildet ist.

7. Lagerbuchse nach Anspruch 5, **dadurch gekennzeichnet, dass** der Kanal (42) in den Kern (22) integriert ist.

8. Lagerbuchse nach einem der voranstehenden Ansprüche, **dadurch gekennzeichnet, dass** die Lagerbuchse (10) in Horizontalrichtung geteilt ist und zwei Halbbuchsen (12, 14) aufweist.

9. Lagerbuchse nach Anspruch 8, **dadurch gekennzeichnet, dass** die Halbbuchsen (12, 14) einen identischen Aufbau aufweisen.

10. Lagerbuchse nach Anspruch 8 oder Anspruch 9, **dadurch gekennzeichnet, dass** der Elastomerkörper (24) der Halbbuchsen (12, 14) Lufttaschen (38) aufweist, die im zusammengesetzten Zustand der Halbbuchsen (12, 14) die Luftfederelemente (26a, 26b) bilden.

11. Lagerbuchse nach einem der Ansprüche 8 bis 10, **dadurch gekennzeichnet, dass** die Elastomerkörper (24) der Halbbuchsen (12, 14) im zusammengefügten Zustand die Hohlkammern (28) der Halbbuchsen (12, 14) luftdicht abschließen.

12. Lagerbuchse nach einem der voranstehenden Ansprüche, **dadurch gekennzeichnet, dass** das Gehäuse (18) der Lagerbuchse (10) wenigstens einen Befestigungsflansch (20) aufweist.

13. Lagerbuchse nach Anspruch 12, **dadurch gekennzeichnet, dass** der Elastomerkörper (24) an dem Befestigungsflansch (20) einen Anschlag (32) ausbildet.

14. Lagerbuchse nach einem der voranstehenden Ansprüche, **dadurch gekennzeichnet, dass** der Kern (22) eine Befestigungsöffnung (36) aufweist.

15. Lagerbuchse nach einem der voranstehenden Ansprüche, **dadurch gekennzeichnet, dass** der Elastomerkörper (24) zwischen Kern (22) und Gehäuse (18) einvulkanisiert ist.

## Claims

1. Elastic bearing bush (10), in particular for use in a chassis of a motor vehicle, having a core (22) which is arranged within a housing (18) and is connected via an elastomer body (24) to the housing (18), the bearing bush (10) having different spring and damping properties in a first spatial direction (y) and a second spatial direction (x), and the spring and damping properties being defined by at least one pneumatic-spring element (26a, 26b) and at least one elastomer spring (30a, 30b), **characterized in that** the bearing bush (10) has a substantially rectangular base area, **in that** the longitudinal sides (19a, 19b) of the housing (18) are longer than the end sides (17a, 17b) of the housing (18), **in that** the pneumatic-spring element (26a, 26b) is configured in the elastomer body (24) along the longitudinal sides (19a, 19b) of the housing (18) between the core (22) and the housing (18), and **in that** the elastomer spring (30a, 30b) is arranged on the end sides (17a, 17b) of the housing (18).

2. Bearing bush according to Claim 1, **characterized in that** the pneumatic-spring element (26a, 26b) is configured in the elastomer body (24) in the first spatial direction (y) between the core (22) and the housing (18).

3. Bearing bush according to one of the preceding claims, **characterized in that** the pneumatic-spring element (26a, 26b) has a throttle opening (34) which connects a hollow chamber (28) of the pneumatic-spring element (26a, 26b) to the surroundings.

4. Bearing bush according to one of the preceding claims, **characterized in that** the elastomer spring (30a, 30b) is configured as a lug which is arranged between the core (22) and the housing (18).

5. Bearing bush according to one of the preceding claims, **characterized in that** two pneumatic-spring elements (26a, 26b) are provided, the hollow chambers (28) of which are connected via a channel (42).

6. Bearing bush according to Claim 5, **characterized in that** the channel (42) is formed by a channel shell (40).

7. Bearing bush according to Claim 5, **characterized in that** the channel (42) is integrated into the core (22).

8. Bearing bush according to one of the preceding claims, **characterized in that** the bearing bush (10) is divided in the horizontal direction and has two half-bushes (12, 14).

9. Bearing bush according to Claim 8, **characterized in that** the half-bushes (12, 14) have an identical construction.

10. Bearing bush according to Claim 8 or Claim 9, **characterized in that** the elastomer body (24) of the half-bushes (12, 14) has air pockets (38) which form the pneumatic-spring elements (26a, 26b) in the assembled state of the half-bushes (12, 14).

11. Bearing bush according to one of Claims 8 to 10, **characterized in that** the elastomer bodies (24) of the half-bushes (12, 14) close off the hollow chambers (28) of the half-bushes (12, 14) in an airtight manner in the connected state.

12. Bearing bush according to one of the preceding claims, **characterized in that** the housing (18) of the bearing bush (10) has at least one fastening flange (20).

13. Bearing bush according to Claim 12, **characterized in that** the elastomer body (24) forms a stop (32) on the fastening flange (20).

14. Bearing bush according to one of the preceding claims, **characterized in that** the core (22) has a fastening opening (36).

15. Bearing bush according to one of the preceding claims, **characterized in that** the elastomer body (24) is vulcanized in between the core (22) and the housing (18).

## Revendications

1. Douille-coussinet élastique (10), en particulier destinée à être utilisée dans un train de roulement d'un véhicule automobile, avec un noyau (22), qui est agencé à l'intérieur d'un boîtier (18) et qui est relié au boîtier (18) via un corps élastomère (24), dans laquelle la douille-coussinet (10) présente des propriétés de suspension et d'amortissement différentes dans une première direction dans l'espace (y) et dans une seconde direction dans l'espace (x), et dans laquelle les propriétés de suspension et d'amortissement sont déterminées par au moins un élément de ressort à air (26a, 26b) et au moins un ressort élastomère (30a, 30b), **caractérisée en ce que** la douille-coussinet (10) présente une surface de base essentiellement rectangulaire, **en ce que** les côtés longs (19a, 19b) du boîtier (18) sont plus longs que les côtés frontaux (17a, 17b) du boîtier (18), **en ce que** l'élément de ressort à air (26a, 26b) est réalisé dans le corps élastomère (24) le long des côtés longs (19a, 19b) du boîtier (18) entre le noyau (22) et le boîtier (18), et **en ce que** le ressort élastomère (30a, 30b) est agencé au niveau des côtés frontaux (17a, 17b) du boîtier (18).

2. Douille-coussinet selon la revendication 1, **caractérisée en ce que** l'élément de ressort à air (26a, 26b) est réalisé dans le corps élastomère (24) dans la première direction dans l'espace (y) entre le noyau (22) et le boîtier (18).

3. Douille-coussinet selon l'une des revendications précédentes, **caractérisée en ce que** l'élément de ressort à air (26a, 26b) comporte une ouverture à étranglement (34) qui relie une chambre creuse (28) de l'élément de ressort à air (26a, 26b) avec l'environnement.

4. Douille-coussinet selon l'une des revendications précédentes, **caractérisée en ce que** le ressort élastomère (30a, 30b) est réalisé sous forme d'un barreau qui est agencé entre le noyau (22) et le boîtier (18).

5. Douille-coussinet selon l'une des revendications précédentes, **caractérisée en ce qu'**il est prévu deux éléments de ressort à air (26a, 26b), dont les chambres creuses (28) sont reliées via un canal (42).

6. Douille-coussinet selon la revendication 5, **caractérisée en ce que** le canal (42) est formé par une coque de canal (40).

7. Douille-coussinet selon la revendication 5, **caractérisée en ce que** le canal (42) est intégré dans le noyau (22).

8. Douille-coussinet selon l'une des revendications précédentes, **caractérisée en ce que** la douille-coussinet (10) est subdivisée en direction horizontale et comporte deux demi-douilles (12, 14).

9. Douille-coussinet selon la revendication 8, **caractérisée en ce que** les demi-douilles (12, 14) ont une structure identique.

10. Douille-coussinet selon la revendication 8 ou 9, **caractérisée en ce que** le corps élastomère (24) des demi-douilles (12, 14) comprend des poches à air (38) qui forment les éléments de ressort à air (26a, 26b) dans la situation assemblée des demi-douilles (12, 14).

11. Douille-coussinet selon l'une des revendications 8 à 10, **caractérisée en ce que** les corps élastomères (24) des demi-douilles (12, 14) referment de manière étanche les chambres creuses (28) des demi-douilles (12, 14) dans la situation assemblée.

12. Douille-coussinet selon l'une des revendications précédentes, **caractérisée en ce que** le boîtier (18) de la douille-coussinet (10) comprend au moins une bride de fixation (20).

13. Douille-coussinet selon la revendication 12, **caractérisée en ce que** le corps élastomère (24) forme une butée (32) sur la bride de fixation (20).

14. Douille-coussinet selon l'une des revendications précédentes, **caractérisée en ce que** le noyau (22) comporte une ouverture de fixation (36).

15. Douille-coussinet selon l'une des revendications précédentes, **caractérisée en ce que** le corps élastomère (24) est intégré par vulcanisation entre le noyau (22) et le boîtier (18).
